# EUROPEAN PATENT APPLICATION

(11) **EP 1 978 609 A2**
(43) Date of publication of application: **08.10.2008**
(21) Application number: 08152832.5
(22) Date of filing: 17.03.2008
(51) Int. Cl.: H01R 29/00

(54) **Electronic device and function performing method thereof**

(30) Priority: 06.04.2007 KR 20070034290
(71) Applicant: Samsung Electronics Co., Ltd., Suwon-si, Gyeonggi-do 442-743 (KR)
(72) Inventor: Oh, Min-a, Seoul (KR); Shin, Sun-soo, Yongin-si, Gyeonggi-do (KR)
(74) Representative: Grünecker, Kinkeldey, Stockmair & Schwanhäusser Anwaltssozietät

(57) **Abstract**

A device (100) and method of performing functions with an external device (1), the function performing method including: performing a first function when an external device is connected to a connecting unit in a first position, and performing a second function, different from the first function, when the external device is connected to the connecting unit in a second position.

## Description

### BACKGROUND OF THE INVENTION

### 1. Field of the Invention

Aspects of the present invention relate to an electronic device, and more particularly, to an electronic device that is connectable to an external device through a connecting terminal, and a function embodying method of the electronic device.

### 2. Description of the Related Art

An electronic device (such as a general audio device, a home theater, a computer, a portable multimedia player (PMP), a mobile phone, and a digital multimedia device) has a function that reproduces audio or video signals. In addition, such an electronic device is provided with a connecting terminal (such as a universal serial bus (USB) terminal) in which an external device with a corresponding port (such as a USB port) is inserted, and thus is capable of transmitting and receiving data to and from the external device. That is, the electronic device receives audio or video data stored in the external device through a connection of the connecting terminal with the external device. Here, the external device is directly or indirectly connected to the connecting terminal of the electronic device through, for example, a USB port or a separate USB connecting cable connected to the USB port.

After the external device is connected to the connecting terminal of the electronic device, a user manipulates a plurality of operating keys provided on the electronic device or a remote control unit to input operating signals from a position remote from the electronic device, thereby inputting desired operating signals.

That is, after connecting the external device to the electronic device, the user's manipulation of operating keys is separately carried out. Such a complicated process between the electronic device and the external device decreases the user's accessibility and efficiency.

### SUMMARY OF THE INVENTION

Aspects of the present invention provide an electronic device capable of improving operability thereof when an external device is connected thereto, and a function embodying method of the electronic device.

According to an aspect of the present invention, there is provided a function embodying method of an electronic device, the method including: performing a first electronic function with an external device when the external device is connected to a connecting unit in a first position; and performing a second electronic function, different from the first electronic function, with the electronic device when the external device is connected to the connecting unit in a second position.

According to an aspect of the present invention, the connecting unit may be rotatable between the first position and the second position.

According to an aspect of the present invention, the connecting unit may slide between the first position and the second position.

According to an aspect of the present invention, the connecting unit may toggle between the first position and the second position.

According to an aspect of the present invention, the function embodying method may further include informing a position of the connecting unit by different video signals or audio signals.

According to an aspect of the present invention, the external device may be one of an MP3 player, the first function includes a function of receiving data stored in the MP3 player, and the second functions may be a function of transmitting the data in the electronic device to the MP3 player and a function of charging the MP3 player with electricity.

According to another aspect of the present invention, there is provided an electronic device including: an external device-connecting terminal movable between a first position and a second position, and a control unit to automatically perform a first electronic function with an external device when the external device is connected to the external device-connecting terminal in the first position, and to automatically perform a second electronic function, different from the first electronic function, when the external device is connected to the external device-connecting terminal in the second position.

According to an aspect of the present invention, the external device-connecting terminal may be rotatable between the first and second positions, and the control unit receives data stored in the external device when the external device-connecting terminal is in the first position and transmits the data in the electronic device to the external device when the external device-connecting terminal is in the second position.

According to an aspect of the present invention, the external device-connecting terminal may be rotatable between the first position, the second position, and a third position, and the control unit may receive data stored in the external device when the external device-connecting terminal is in the first position, transmit the data in the electronic device to the external device when the external device-connecting terminal is in the second position, and charge the external device with electricity when the external device-connecting terminal is in the third position.

According to an aspect of the present invention, the external device-connecting terminal may be connected to a main body of the external device.

According to an aspect of the present invention, the external device-connecting terminal may be formed to project by a certain height from the electronic device.

According to yet another aspect of the present invention, there is provided an electronic device including: an external device-connecting terminal to connect to portable multimedia player (PMP); a rotating member to surround the external device-connecting terminal and to rotate between a first position and a second position, and a control unit to automatically perform a first electronic function with the PMP when the rotating member is in the first position, and to perform a second electronic function with the PMP when the rotating member is in the second position.

According to an aspect of the present invention, the external device-connecting terminal and the rotating member may be formed to project by a certain height from the electronic device.

According to an aspect of the present invention, the rotating member may have a handle provided thereon.

According to still another aspect of the present invention, there is provided a system of performing functions between two devices, the system including: an electronic device including: an external device-connecting terminal movable between a first position and a second position, and a control unit to perform functions; and an external device to connect to the external device-connecting terminal in the first position and the second position, wherein the control unit performs a first electronic function with the external device when the external device is connected to the external device-connecting terminal in the first position, and the control unit performs a second electronic function, different from the first electronic function, when the external device is connected to the external device-connecting terminal in the second position.

According to another aspect of the present invention, there is provided a function performing method, the method including: connecting a portable multimedia player (PMP) to a connecting unit; performing a first electronic function with the PMP when a rotating member surrounding the connecting unit is in a first position; and performing a second electronic function, different from the first electronic function, with the PMP when the rotating member is in a second position.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a perspective view schematically illustrating an electronic device in which the external device is connected in a first position according to an embodiment of the present invention;
FIG. 2 is a perspective view schematically illustrating the electronic device illustrated in FIG. 1 in which the external device is connected in a second position;
FIG. 3 is a front view illustrating a body of the electronic device illustrated in FIG. 1;
FIG. 4 is a cross-sectional view taken along line IV-IV of FIG. 3;
FIG. 5 is a block diagram schematically illustrating an electronic device according to an embodiment of the present invention; and
FIG. 6 is a perspective view schematically illustrating an electronic device according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

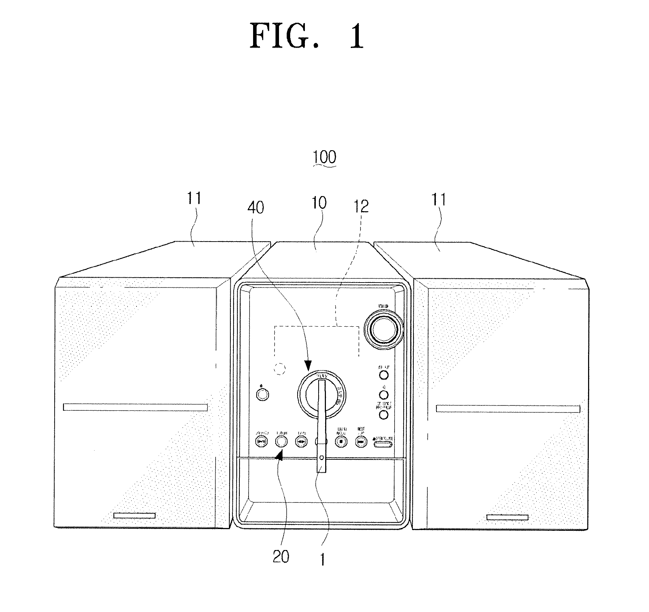

As illustrated in FIGs. 1 through 5, an electronic device 100 according to an embodiment of the present invention includes an electronic device body 10, an external device-connecting terminal 40, a control unit 50, and an informing unit 60.

The electronic device body 10 protects parts and components of the electronic device 100 mounted therein. For example, the electronic device body 10 may include a display window 12 on a front surface (as illustrated in FIGs. 1-4) that displays operation conditions or states of the electronic device 100. In addition, the electronic device body 10 has an operating unit 20 provided thereon to operate functions of the electronic device 100.

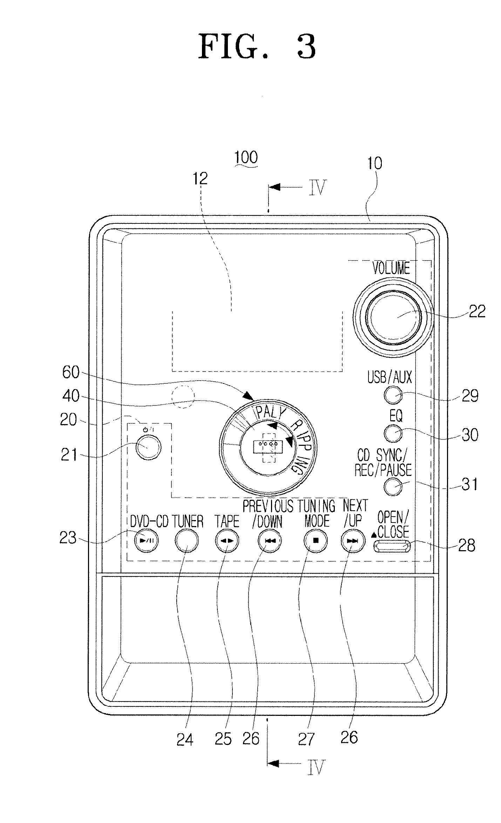

As illustrated in FIG. 3, the operating unit 20 is provided with various keys, such as a power key 21, a volume key 22, a reproduction/pause key 23, a tuner key 24, a turnabout key 25, moving keys 26, a stop key 27, an open and close key 28, a universal serial bus/auxiliary (USB/AUX) key 29, an emotional quotient (EQ) key 30, a compact disc synchronization /recording /pause (CD SYNC/REC/PAUSE) key 31, etc. However, it is understood that other mechanisms and functionalities can be included in the operating unit 20, and that the operating unit 20 and display window 12 can be combined in a touch screen display.

The external device-connecting terminal 40 connects to an external device 1, and is movable between at least two positions. The external device-connecting terminal 40 may be provided in a middle of the front surface of the electronic device body 10 in consideration of a user's accessibility. However, aspects of the present invention are not limited thereto.

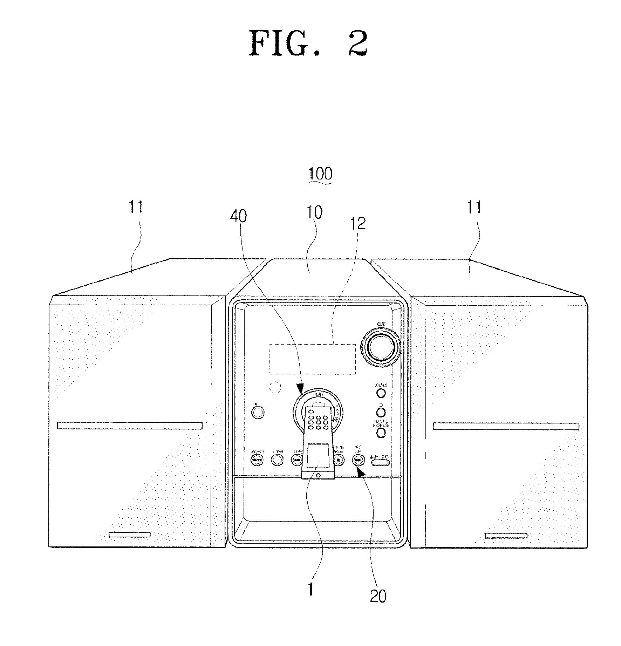

In the embodiment of the present invention illustrated in FIGs. 1 through 3, the external device-connecting terminal 40 is rotatable between a first position and a second position. Here, the first position of the external device-connecting terminal 40 is a position in which the external device 1 is connected to the external device-connecting terminal 40 in a state where a front surface of the external device is perpendicular to a floor, as illustrated in FIG. 1. The second position of the external device-connecting terminal 40 is a position in which the external device-connecting terminal 40 is rotated in a predetermined angle from the first position, so that the external device 1 is connected to the external device-connecting terminal 40 in a state where the front surface of the external device 1 is parallel to the floor, as illustrated in FIG. 2. Although the predetermined angle (i.e., the rotating angle of the external device-connecting terminal 40 between the first position and the second position) is illustrated as approximately 90 degrees, aspects of the present invention are not limited thereto. Furthermore, it is understood that external devices other than the external device 1 illustrated in FIGs. 1 and 2 may be used, such that the first position does not necessarily correspond to a flat surface of the external device 1 being perpendicular to the floor and the second position does not necessarily correspond to the flat surface of the external device 1 being parallel to the floor. Moreover, it is understood that the external device-connecting terminal 40 is movable between the first position and the second position (or other positions) by methods other than rotating.

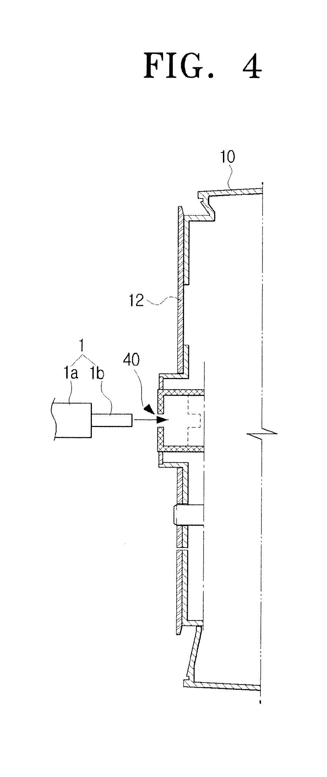

As illustrated in FIG. 4, the external device 1 is a device that connects to other devices through a USB port 1 b provided on a main body 1a to transmit and to receive data thereto and therefrom. The external device-connecting terminal 40 has a USB terminal that corresponds to the USB port 1b of the external device 1. The USB terminal of the external device-connecting terminal 40 and the USB port 1b of the external device 1 are electrically connected to each other through connecting pins (not illustrated). Since constructions of the USB terminal and the USB port are the same as those of the conventional art, a detailed description thereof will be omitted. It is understood that types of connections other than USB may be used to connect the electronic device 100 and the external device 1 according to aspects of the present invention.

The external device 1 directly or indirectly connects to the external device-connecting terminal 40 through the USB port 1b of the main body 1a or a separate connecting cable connected to the USB port 1 b of the main body 1 a.

Furthermore, it is understood that the external device-connecting terminal 40 does not necessarily change positions by rotating, as described above. For instance, although not illustrated, the external device-connecting terminal 40 can slide or slide while rotating in an inserting direction of the external device 1 or a direction perpendicular to the inserting direction of the external device 1. Also, the external device-connecting terminal 40 can be swung or toggled in several directions (as in a toggle switch) so that a position thereof is changed.

That is, while the external device-connecting terminal 40 is a connecting device for transmitting and receiving the data to and from the external device 1, the external device-connecting terminal 40 is also a kind of switch for changing functions of the electronic device 100 and/or the external device 1. Accordingly, the external device-connecting terminal 40 can be configured to use any one of various constructions that allow the external device-connecting terminal 40 to be movable to at least two positions while connected to the external device 1.

In the embodiment of the present invention illustrated in FIGs. 1 through 3, the electronic device 100 is illustrated and explained as including a sound device (such as an audio device or a CD player) that outputs inputted audio data, and the external device 1 is illustrated and explained as including a MP3 player. Such a sound device outputs and reproduces sound data stored in a storage medium, such as a CD. For this, the electronic device body 10 is provided with a speaker 11 to provide the sound data to a user. However, it is understood that aspects of the present invention are not limited thereto. For example, the electronic device 100 and/or the external device 1 may be any of various devices, such as a portable multimedia player (PMP), a personal digital assistant (PDA), a home theater component, a digital multimedia device, a mobile phone, a computer, etc., that can transmit and receive data.

The control unit 50 performs (or controls) different functions according to the position of the external device-connecting terminal 40. That is, the control unit 50 performs a first function using the device 1 when the external device 1 is connected to the external device-connecting terminal 40 in a first position, and performs a second function using the device 1 different from the first function when the external device 1 is connected to the external device-connecting terminal 40 is in a second position.

That is, the first function corresponds to when the external device-connecting terminal 40 is positioned in the first position, and the second functions correspond to when the external device-connecting terminal 40 is positioned in the second position. As an example, the first function may receive, in the electronic device 100, data stored in the external device 1, and the second function may transmit data in the electronic device 100 to the external device 1. The functions may also include transmitting/receiving play lists, syncing play lists, transmitting/receiving meta data of stored content, performing software updates, recharging a power supply, and reformatting a storage medium, although not limited thereto.

That is, when the external device-connecting terminal 40 is in the first position, the electronic device 100 performs the first function (such as receiving the data from the external device 1), and when the external device-connecting terminal 40 is in the second position, the electronic device 100 performs the second function (such as transmitting the data to the external device 1). Here, when receiving the data from the external device 1, the data stored in the external device 1 may be reproduced through the electronic device 100 or simply transferred to the electronic device 100 to be reproduced at a user's convenience. In transmitting the data to the external device 1, the data of the electronic device 100 may be file-converted and stored in the external device 1 (i.e., a ripping process).

Furthermore, to carry out a third function (for example, supplying power from the electronic device 100 to the external device 1 to recharge the external device 1 with electricity), the external device-connecting terminal 40 can be positioned in a third position that is different from the first position and the second position. According to an aspect of the present invention, the functions corresponding to each of the positions may be controlled and/or changed by a user through, for example, manipulation of operating or input devices on the body 10 of the electronic device 100 or the main body 1 a of the external device 1.

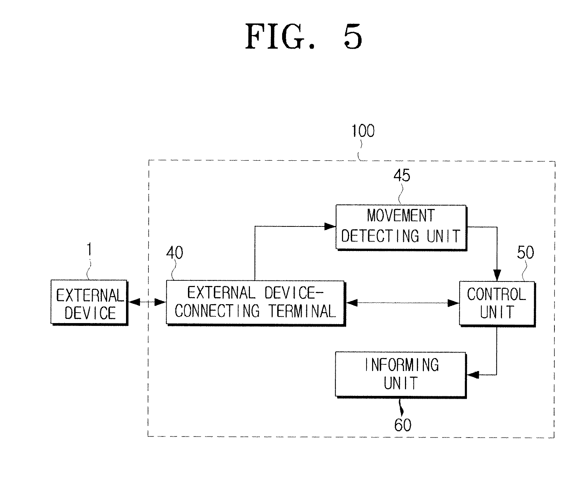

Movements of the external device-connecting terminal 40 between positions are detected by a movement detecting unit 45, as illustrated in FIG. 5. According to the detected information, the control unit 50 performs (or controls) any one of various functions as described above. The movement detecting unit 45 is configured to employ sensors to detect a movement of the external device-connecting terminal to a specific position.

As illustrated in FIG. 3, an informing unit 60 is provided to surround the external device-connecting terminal 40, and informs a user of a position of the external device-connecting terminal 40 with different visual or audio signals. The informing unit 60 is controlled by the control unit 50 that receives the information detected by the movement detecting unit 45. It is understood that according to other aspects, the external device 1 includes an informing unit, or the electronic device 100 does not include the informing unit 60.

As an example, when the external device-connecting terminal 40 is positioned in the first position, the informing unit 60 emits a red light, and when the external device-connecting terminal 40 is positioned in the second position, the informing unit 60 emits a blue light. Also, if the external device-connecting terminal 40 is positioned in the third position (as described above), the informing unit 60 can emit a green light.

Alternatively, the informing unit 60 can inform the user of the positioned states of the external device-connecting terminal 40 through different audio signals through the speaker 11 of the electronic device body 10.

Hereinafter, a function performing method of the electronic device constructed as described above will be explained with reference to FIGs. 1 through 5. Referring to FIG.1, when a user connects the external device 1 (such as an MP3 player) to the external device-connecting terminal 40 of the electronic device 100, the movement detecting unit 45 detects the external device 1 connected to the external device-connecting terminal 40 in a first position, and transmits the detected information to the control unit 50. Then, the control unit 50 determines a current position of the external device-connecting terminal 40 as a first position, and performs a corresponding first function. As a result, the electronic device 100 receives, for example, audio data from the external device 1 and reproduces the audio data through the speaker 11.

After that, as illustrated in FIG. 2, the user rotates the external device 1 connected to the external device-connecting terminal 40 from the first position by an angle of approximately 90 degrees. As a result, the external device-connecting terminal 40 is positioned in a second position. Accordingly, the movement detecting unit 45 detects the position of the external device-connecting terminal 40 and transmits the detected information to the control unit 50. Then, the control unit 50 controls the electronic device 100 to perform a second function different from the first function, such as transmitting data stored in the electronic device 100 to the external device 1.

At this time, if the user rotates the external device 1 such that the external device-connecting terminal 40 is in a third position, different from the first position and the second position, a third function, for example, a charging function, can be performed by the control unit 50.

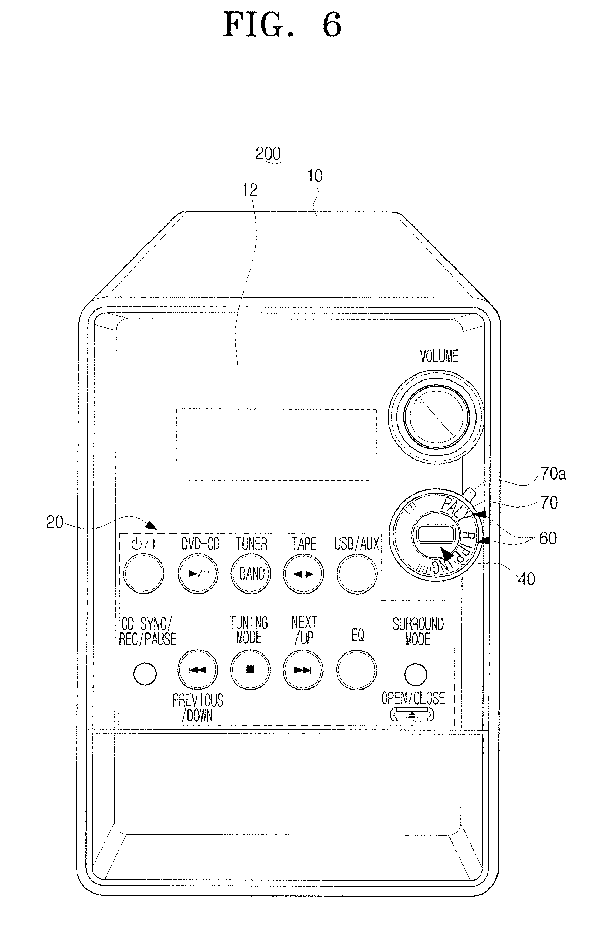

FIG. 6 is a view schematically illustrating an electronic device 200 according to another embodiment of the present invention. Referring to FIG. 6, the electronic device 200 includes an electronic device body 10, an operating unit 20, an external device-connecting terminal 40, a control unit (not illustrated), a lettered display part 60', and a rotating member 70. In the following description of the embodiment illustrated in FIG. 6, elements similar to those of the electronic device 100 of the embodiment illustrated in FIGs. 1 through 5 are designated with the same reference numerals throughout, and detailed descriptions and illustrations thereof are omitted.

As illustrated in FIG. 6, the external device-connecting terminal 40 is connected to the external device 1, but it is unmovable. Instead, an annular rotating member 70 that is provided to surround the external device-connecting terminal 40 is provided to be rotatable between at least two positions. Movements of the rotating member 70 are detected by the movement detecting unit 45. Here, to facilitate a user's operation, a handle 70a is provided to project from the rotating member 70.

Also, in addition to or instead of the informing unit 60 illustrated in FIGs. 1 through 5, which emits the different video or audio signals, the electronic device 200 includes the lettered display part 60' between the rotating member 70 and the external device-connecting terminal 40 to display different functions.

Here, in the lettered display part 60', the letters PLAY and RIPPING are indicated. The letters PLAY and RIPPING designate the first position and the second position, respectively of the rotating member 70 that allows the electronic device 200 to, for example, transmit and receive data to and from the external device1.

Accordingly, if after connecting the external device 1 to the electronic device body 10, a user moves the handle 70a of the rotating member 70 to a letter (i.e., first position of the rotating member 70) of the lettered display part 60' corresponding to a desired function (for example, the letter PLAY corresponding to a first function), the movement detecting unit 45 detects the position of the rotating member 70 and transmits the detected information to the control unit 50. As a result, the electronic device 200 receives and reproduces the audio data stored in the external device 1.

Thus, as soon as the user connects the external device 1 to the electronic device body 10, the user can carry out the action of inputting the operation signal more efficiently and conveniently.

In the embodiments illustrated in FIGs. 1 through 5 and FIG. 6, the first function corresponding to the first position of the external device-connecting terminal 40 or the rotating member 70 has been described as a receiving of data. However, it is understood that the first function can be any one of various functions of the electronic device 100 or 200, such as the data transmission of the electronic device 100 or 200, the supplying of power to the external device 1, a stand-by function, etc. That is, the plurality of positions of the external device-connecting terminal 40 or the rotating member 70 and the functions corresponding thereto are not limited to the explanations and the illustrations as described above. Furthermore, while described in terms of audio data, it is understood that aspects of the invention can be applied to other data and/or software and to the interaction of an electronic device with an external device using the data. Moreover, it is understood that aspects of the invention, and components of the present invention (such as the control unit) may be implemented as software modules.

As apparent from the forgoing description, according to aspects of the present invention, a first function is performed when an external device is connected to an external device-connecting terminal in a first position, and a second function different from the first function is performed when the external device is connected to the external device-connecting terminal in a second position. Accordingly, the data transmission and reception between the electronic device and the external device is simplified. Thus, a user's accessibility and efficiency can be increased.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A function performing method of an electronic device, the method comprising:
connecting an external device to a connecting unit of the electronic device, the connecting unit having first and second positions;
performing a first electronic function through an interaction between the electronic device and the external device when the connected external device is detected as being at the first position; and
performing a second electronic function, different from the first electronic function, through an interaction between the electronic device and the external device when the connected external device is detected as being at the second position.

2. The function performing method as claimed in claim 1, wherein the connecting unit is rotatable between the first position and the second position.

3. The function performing method as claimed in claim 1, wherein the connecting unit slides between the first position and the second position.

4. The function performing method as claimed in claim 1, wherein the connecting unit toggles between the first position and the second position.

5. The function performing method as claimed in claim 1, further comprising:
outputting a first visual signal when the external device is connected to the connecting unit at the first position; and
outputting a second visual signal, different from the first visual signal, when the external device is connected to the connecting unit at the second position.

6. The function performing method as claimed in claim 1, further comprising:
outputting a first audio signal when the external device is connected to the connecting unit at the first position; and
outputting a second audio signal, different from the first audio signal, when the external device is connected to the connecting unit at the second position.

7. The function performing method as claimed in claim 1, wherein the external device is one of an MP3 player, a portable multimedia player (PMP), a digital multimedia device, a mobile phone, and a personal digital assistant (PDA).

8. The function performing method as claimed in claim 1, wherein the first electronic function is a function of receiving data stored in the external device, and the second electronic function is a function of transmitting data to the electronic device.

9. The function performing method as claimed in claim 1, wherein the second electronic function is a function of charging the external device with electricity.

10. The function performing method as claimed in claim 1, further comprising:
performing a third electronic function through an interaction between the electronic device and the external device when the connected external device is detected as being at a third position of the connecting unit.

11. The function performing method as claimed in claim 1, wherein the external device is connected to the connecting unit through a universal serial bus (USB) connection.

12. An electronic device comprising:
an external device-connecting terminal movable between a first position and a second position; and
a control unit to automatically perform a first electronic function with an external device when the external device is connected to the external device-connecting terminal and is detected in the first position, and to automatically perform a second electronic function, different from the first electronic function, when the external device is connected to the external device-connecting terminal and is detected in the second position.

13. The electronic device as claimed in claim 12, wherein the external device-connecting terminal is rotatable between the first position and the second position.

14. The electronic device as claimed in claim 12, wherein the external device-connecting terminal slides between the first position and the second position.

15. The electronic device as claimed in claim 12, wherein the external device-connecting terminal toggles between the first position and the second position.

16. The electronic device as claimed in claim 12, further comprising:
an informing unit to output a first visual signal when the external device is connected to the external device-connecting terminal in the first position, and to output a second visual signal, different from the first visual signal, when the external device is connected to the external device-connecting terminal in the second position.

17. The electronic device as claimed in claim 12, further comprising:
an informing unit to output a first audio signal when the external device is connected to the external device-connecting terminal in the first position, and to output a second audio signal, different from the first audio signal, when the external device is connected to the external device-connecting terminal in the second position.

18. The electronic device as claimed in claim 12, wherein the external device is one of an MP3 player, a portable multimedia player (PMP), a digital multimedia device, a mobile phone, and a personal digital assistant (PDA).

19. The electronic device as claimed in claim 12, wherein the electronic device is one of a home theatre, a stereo, a computer, an MP3 player, a portable multimedia player (PMP), a digital multimedia device, a mobile phone, and a personal digital assistant (PDA).

20. The electronic device as claimed in claim 12, wherein the first electronic function is a function of receiving data stored in the external device, and the second electronic function is a function of transmitting data to the external device.

21. The electronic device as claimed in claim 12, wherein the second electronic function is a function of charging the external device with electricity.

22. The electronic device as claimed in claim 12, wherein:
the external device-connecting terminal is movable between the first position, the second position, and a third position; and
the control unit automatically performs a third electronic function with the external device when the external device is connected to the external device-connecting terminal and is detected in the third position.

23. The electronic device as claimed in claim 12, wherein the external device-connecting terminal is directly connected with a main body of the external device.

24. The electronic device as claimed in claim 12, wherein the external device-connecting terminal is formed to project by a certain height from the electronic device.

25. The electronic device as claimed in claim 12, wherein the external device is connected to the external device-connecting terminal through a universal serial bus (USB) connection.

26. An electronic device comprising:
an external device-connecting terminal to connet to a portable multimedia player(PMP);
a rotating member to surround the external device-connecting terminal and to rotate between a first position and a second position; and
a control unit to automatically perform a first electronic function with the PMP when the rotating member is detected in the first position, and to perform a second electronic function with the PMP when the rotating member is detected in the second position.

27. The electronic device as claimed in claim 24, wherein the control unit receives data stored in the PMPwhen the rotating member is in the first position, and transmits data to the PMP when the rotating member is in the second position.

28. The electronic device as claimed in claim 24, wherein:
the rotating member is rotatable between the first position, the second position, and a third position; and
the control unit receives data stored in the PMP when the rotating member is in the first position, transmits data to the PMP when the rotating member is in the second position, and charges the PMP with electricity when the rotating member is detected in the third position.

29. The electronic device as claimed in claim 24, wherein the external device-connecting terminal and the rotating member are formed to project by a certain height from the electronic device.

30. The electronic device as claimed in claim 24, wherein the rotating member has a handle provided thereon.

31. The electronic device as claimed in claim 24, wherein the external device-connecting terminal connects to the PMP through a universal serial bus (USB) connection.

32. A system of performing functions between two devices, the system comprising:
an electronic device comprising:
an external device-connecting terminal movable between a first position and a second position, and
a control unit to perform functions; and
an external device to connect to the external device-connecting terminal,
wherein the control unit performs a first electronic function with the external device when the external device is connected to the external device-connecting terminal in the first position, and the control unit performs a second electronic function, different from the first electronic function, when the external device is connected to the external device-connecting terminal in the second position.

33. The system as claimed in claim 29, wherein the first electronic function is a function of receiving data stored in the external device, and the second electronic function is a function of transmitting data to the electronic device.

34. The system as claimed in claim 29, wherein the external device is one of an MP3 player, a portable multimedia player (PMP), a digital multimedia device, a mobile phone, and a personal digital assistant (PDA).

35. A function performing method, the method comprising:
connecting a portable multimedia player (PMP) to a connecting unit;
performing a first electronic function with the PMP when a rotating member surrounding the connecting unit is in a first position; and
performing a second electronic function, different from the first electronic function, with the PMP when the rotating member is in a second position.

36. The method as claimed in claim 32, wherein the first electronic function is a function of receiving data from the PMP, and the second electronic function is a function of transmitting data to the PMP.
